# EUROPEAN PATENT APPLICATION

(11) **EP 2 747 001 A1**
(43) Date of publication of application: **25.06.2014**
(21) Application number: 12198474.4
(22) Date of filing: 20.12.2012
(51) Int. Cl.: G06Q 10/06

(54) **A method and a system for granting an access to MES functionalities**

(71) Applicant: Siemens Aktiengesellschaft, 80333 München (DE)
(72) Inventor: Colletti, Paola, 16132 Genova (IT); Noferi, Stefano, 16149 Genova (IT)
(74) Representative: Fischer, Michael

(57) **Abstract**

The present invention discloses a method and a system for granting an access to MES functionalities to a user based on MES entity attributes within a production process controlled by a MES software, comprising:
a) a GUI allowing a user to subscribe to the MES controlled production process using a user-specific log file;
b) a client application builder allowing to define the MES functionalities and representing the MES functionalities in terms of a generic toolbar comprising clickable buttons on a MES screen and to link logical entities to the MES functionalities and to determine the MES entity attributes for at least a number of logical entities;
d) a MES software administrator enabled to determine a number of user profiles, each user profile assigning different access types to the clickable buttons wherein the access types comprise at least a permanent type, a condition type and a hidden type, wherein a clickable button in permanent type is always accessible on the MES screen and a clickable button in condition type is only accessible on the MES screen when a condition linked to the MES entity attributes is fulfilled and a clickable button in hidden type is not accessible on the MES screen at all;
e) logic means in order to analyze the user-specific log file in order to determine the respective user profile of the subscribed user;
f) a contextualization service that enables to display the generic toolbar to the MES screen, thereby displaying the clickable buttons according to the access types being determined in the dependency of the determined user profile; and
g) an MES execution engine for the execution of the MES controlled production process according to the MES functionality accessible to and selectable by the respective user.

## Description

The present invention relates to a method and a system for granting an access to MES functionalities to a user based on MES entity attributes within a MES controlled production process.

In the world of industrial automation of today, in order to increase competitiveness, manufacturing companies need to simultaneously reduce time-to-market, increase process visibility and production flexibility, optimize forecasting and scheduling, and reduce scrap, stock levels and downtimes; all while ensuring optimal quality and production efficiency across all global facilities.

Hence in order to meet these demanding goals, manufacturing companies require an integrated IT infrastructure that helps them in coordinating production on a global scale and, if necessary, in real time. The Manufacturing Execution System (MES) is generally known as the IT layer that integrates the business systems (e.g. ERP) and production control systems, such as Simatic IT PCS available at Siemens Aktiengesellschaft.

As defined by the Manufacturing Enterprise Solutions Association (MESA International), the MES system "is a dynamic information system that drives effective execution of manufacturing operations", by managing "production operations from point of order release into manufacturing to point of product delivery into finished goods" and by providing "mission critical information about production activities to others across the organization and supply chain via bi-directional communication." The architecture of the Manufacturing Execution Systems is highly regulated by the ANSI/ISA/95 standard.

The ANSI/ISA/95 standardizes a common framework directed to the present and future MES developers. The ANSI/ISA/95 "Enterprise Control System Integration" includes:
● Part 1: Models and Terminal ANSI/ISA/95 terminology;
● Part 2: Object Model Attributes;
● Part 3: Activity Models;
● Part 4: Object models and attributes of manufacturing operations management activities (in development at the time of publication of this standard)
● Part 5: Business-to-manufacturing transactions;
● Part 6: Manufacturing operations transactions (in development at the time of publication of this standard).
●

Because of its generality there is room for developing original customer solutions in line with this standard. Figure 3 of Part 1 (omitted) reproduces by means of ellipses a Multi-level hierarchy of activities depicted in Part 1. This model is subdivided in four superimposed Levels, MES is located at Level 3 while ERP at Level 4. Most MES systems include Programmable Logic Controllers (PLC) and the connectivity to Supervisory Control and Data Acquisition (SCADA) and Distributed Control System (DCS) as part of their product offering for exchanging plant floor data. Figure 7 of Part 1 (omitted) reproduces by means of ellipses connected by arrows a Functional data flow model for the Production operations management, intended as the collection of activities which coordinate, direct, and track the functions that use raw materials, energy, and information to produce product. The MES carries out the Production Control function, the ERP the other functions.

A dynamic representation of the flow model shall sequence the production steps into a workflow for obtaining a final product according to relevant production rules, to say production specific operations instructions. This implies a preliminary segmentation of the production process into a plurality of product segments, as the overlap of information between Product Production Rules (PPR) and the bill of resources. The product segment is a model that describes a job or task consisting of one of more work elements, usually done essentially in one location. A product segment is the most detailed process view for the business system to control material, labor, resource usage, cost, and quality in order to control the production. Product segments may correspond to:
a) IEC 61512-1 process stages, process operations, unit procedures, or operations for batch manufacturing;
b) production unit operations for continuous manufacturing;
c) assembly steps and assembly actions for discrete manufacturing;
d) other types of identifiable time spans for other types of manufacturing.
e)

A workflow in a Manufacturing Execution System has to be considered as an extension of the data contained into a Product Production Rule (PPR) information. In this sense a workflow does not have its own version and lifecycle but inherits the ones of PPR. BANSIcally each step of a workflow has a one-to-one correspondence with a Product Segment of the PPR. The data model of the Product Production Rule is extended in order to contain:
● the connections (branches) among the workflow steps;
● the expressions used to configured it (e.g. to evaluate a condition);
● the workflow layout.

Profitably, a Graphical User Interface (GUI) interacting with the MES software is commonly used to design workflows in a very simple way, for example, by picking up icons from a tool-box on the screen and placing it in the assigned position of the visible layout of the workflow under construction. The same GUI interface permits the operator to browse the current state of the production process.

A workflow should also support a subset of the Workflow Patterns defined by the Workflow Pattern Initiative (WPI): the joint effort of Eindhoven University of Technology and Queensland University of Technology since 1999, the aim of which is to provide a conceptual bANSIs for process technology. This subset should satisfy requirements coming especially from Process and Life Sciences Industries. The main pattern codes defined by WPI are the following:
● Sequence: a task in a process in enabled after the completion of a preceding task in the same process.
● Parallel Split: allows a single thread of execution to be split into two or more branches which can execute tasks concurrently.
● Synchronization (AND Join): a mean of reconverging the execution threads of two or more parallel branches, created using the Parallel Split task earlier in the WF.
● Exclusive Choice (Switch): the divergence of a branch into two or more branches such that when the incoming branch is enabled, the thread of control is immediately passed to precisely one of the outgoing branches based on a mechanism that can select one of the outgoing branches.
● Simple Merge (XOR Join): the convergence of two or more branches into a single subsequent branch.
● Structured Loop: the ability to execute a task or sub-process repeatedly.

The functions that a MES system usually includes are MES functionalities, such as resource allocation and status, dispatching production orders, data collection/acquisition, quality management, maintenance management, performance analysis, operations/detail scheduling, document control, labor management, process management and product tracking.

Thus, the goal of MES systems is to provide manufacturing companies with tools for measuring and controlling production activities with the aim of boosting profitability, increANSIng productivity, improving quality and process performance to manufacturing plants.

MES systems are provided with front-end/client GUI applications showing what MES systems are currently doing. MES GUI applications display to the end-user graphical screens which summarize the state of certain parameters of an industrial plant at a certain moment in time.

The technical term "graphical screen" here denotes a screen that contains information displayed in a graphic mode, in a text mode, in a table mode or in any other format understandable by the end-users. This kind of graphical screens are hereinafter referred to as MES screen.

MES GUI applications play a key role in bringing together process, quality and business information from various sources into one unified real-time view of the production status of the plant.

In state of the art MES systems, the MES GUIs are web-browser so that no further program installation is required at the client side.

The web-browser or browser, in the context of this invention, is defined as the client application which displays the graphical screens at the client side at run-time. Examples of web-browsers include Internet Explorer, Netscape, Modzilla, Firefox and others.

Graphic designers or system engineers, at design time, are faced with the challenge to design cross-functional graphical screens which are going to be displayed, at run time, by browsers within client monitors having a large variety of resolutions and by browser windows having a large variety of sizes.

In order to design the graphical screens, graphic designers typically use "ad-hoc" graphical tool-kits provided together with the MES system. For example, SIMATIC IT, the MES system provided by Siemens, comes together with its web-based proprietary graphical tool-kit called SIMATIC IT Client Application Builder (CAB), which is based on Microsoft ASP.NET technology. Typically MES graphical screens contain a large set of graphical objects.

For this reason, in most common scenarios, the graphical screens are displayed by the client browser in full-screen mode in order to exploit at most the resolution of the video so that as much information as possible is displayed.

In the environment of these MES GUI and MES screens, a demand exists rather often to restrict the access to MES functionalities according to the authorization level of the user. This feature can be named as Functional Access Right Management (FARM) and is achieved by the denial or grant of MES functionalities to users. Typical MES functionalities are for example actions like DISPATCH, POSTPONE, CANCEL, RESTART, SCHEDULE, AMEND, REPEAT that are used with logical entities such as PRODUCTION ORDER, PRODUCTION REQUEST, PRODUCTION SCHEDULE, PRODUCTION MODEL. Other exemplary logical entities are MATERIAL LOT with the actions SPLIT, MOVE, ASSEMBLE, JOIN and TOOL with the actions SEND FOR MAINTENANCE, PREPARE, DISMANTLE, SETUP.

Usually, the restricted access to areas within a distributed IT system is achieved by password or PKI access technology which allows to open and access separate web pages and routines to an authorized user. Unfortunately, these solutions require the design and the programming of separate pages for these users only. Due to the complexity of the MES system and the large number of different MES screens, in particular at shop floor level, this solution requires an unjustifiable volume of programming and maintenance for the MES screens which is not appreciated in the MES system, in particular in the demanding environment of the production shop floor.

One approach used to overcome this problem is to build the MES screen individually on project basis thereby supplying basic building blocks that can be linked together with the help of dedicated tools. Another approach could be to supply the MES screen source code to the System Engineer that customizes the MES screen logic for every individual project. Both solutions have the major drawback to be time-consuming and error-prone because they both do not supply a standard approach for solving the problem and they rely on customization by implementing the logic on the MES screens instead of customizing these MES screens by configuring the MES screens within the CAB environment. Additionally, both approaches are rather expensive because the individual solutions are usually not repeatable for every future project.

It is therefore an objective of the present invention to provide a method and a system for granting the access to MES functionalities that can be embedded in the existing structure of MES screen generation and customization by means of the web-based proprietary graphical tool-kit called SIMATIC IT Client Application Builder (CAB), which is based on Microsoft ASP.NET technology. Since MES graphical screens typically contain a large set of graphical objects, a further objective of the present invention is to provide this method and this system with very low additional effort in programming the generation and customization of the MES screens for the desired Functional Access Right Management (FARM).

With respect to the method, these objectives are achieved according to the present invention by a method for granting an access to MES functionalities to a user based on MES entity attributes within a MES controlled production process, comprising the steps of:
a) subscribing of the user to the MES controlled production process using a user-specific log file;
b) defining the MES functionalities and representing the MES functionalities in terms of a generic toolbar comprising clickable buttons on a MES screen;
c) linking logical entities to the MES functionalities and determining the MES entity attributes for at least a number of logical entities;
d) determining a number of user profiles, each user profile assigning different access types to the clickable buttons wherein the access types comprise at least a permanent type, a condition type and a hidden type, wherein a clickable button in permanent type is always accessible on the MES screen and a clickable button in condition type is only accessible on the MES screen when a condition linked to the MES entity attributes is fulfilled and a clickable button in hidden type is not accessible on the MES screen at all;
e) analyzing the user-specific log file in order to determine the respective user profile of the subscribed user;
f) providing a contextualization service that displays the generic toolbar to the MES screen, thereby displaying the clickable buttons according to the access types being determined in the dependency of the determined user profile; and
g) executing the MES controlled production process according to the MES functionality accessible to and selectable by the respective user.

With respect to the system, these objectives are achieved according to the present invention by a system for granting an access to MES functionalities to a user based on MES entity attributes within a production process controlled by a MES software, comprising:
a) a GUI allowing a user to subscribe to the MES controlled production process using a user-specific log file;
b) a client application builder allowing to define the MES functionalities and representing the MES functionalities in terms of a generic toolbar comprising clickable buttons on a MES screen and to link logical entities to the MES functionalities and to determine the MES entity attributes for at least a number of logical entities;
c) a MES software administrator enabled to determine a number of user profiles, each user profile assigning different access types to the clickable buttons wherein the access types comprise at least a permanent type, a condition type and a hidden type, wherein a clickable button in permanent type is always accessible on the MES screen and a clickable button in condition type is only accessible on the MES screen when a condition linked to the MES entity attributes is fulfilled and a clickable button in hidden type is not accessible on the MES screen at all;
d) logic means in order to analyze the user-specific log file in order to determine the respective user profile of the subscribed user;
e) a contextualization service that enables to display the generic toolbar to the MES screen, thereby displaying the clickable buttons according to the access types being determined in the dependency of the determined user profile; and
f) an MES execution engine for the execution of the MES controlled production process according to the MES functionality accessible to and selectable by the respective user.

The present invention therefore provides the use of the existing CAB environment in order customize the generic MES screen. Due the different user profiles, individual authorizations can be configured for disabling and/or hiding GUI elements, such as a complete toolbars or single buttons, on the web page displayed on the MES screen. In particular, the main advantage of the present invention is the possibility to reuse the generic CAB MES screen in several different user scenarios. The present invention therefore allows to create and distribute a series of generic MES screens and to customize the MES screen according to a predetermined set of authorizations (or non-authorizations/denials).

The invention will now be described in preferred but not exclusive embodiments with reference to the accompanying drawing, wherein:
Figure 1 shows a schematic overview of a system for handling a production process within a manufacturing execution system; and
Figure 2 shows a screenshot taken from a MES screen customized for the production order management.

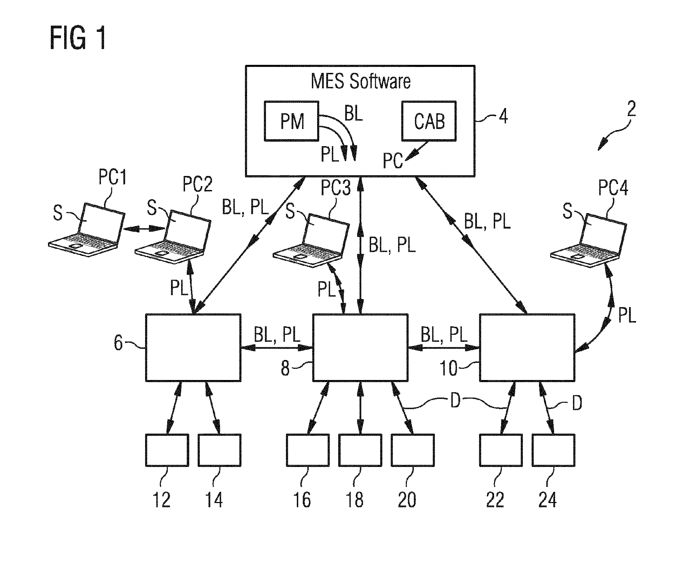

Figure 1 illustrates a schematic overview of a plant control system 2 working as a manufacturing execution system (MES). The system/network 2 comprises a number of data processing units 4, 6, 8, 10 running an MES software for controlling and/or monitoring a production process operating a number of production components 12 to 24. The production components 12 to 24 can be sensors, actuators, motors, step drives, conveyors, valves, pumps and the like. The data processing units 4 to 10 are network computers which typically comprise logical units, calculation means, storage means, display means and the like. The data processing units 4 to 10 are connected within a plant network in order to exchange data to the required extent. One of the data processing units, hereinafter referred to a master console 4, is executing the MES software for controlling and monitoring the operation of the plant.

The master console 4 comprises within the MES software a production modeler PM. This production modeler PM is enabled to define both a business logic BL and a production logic PL within a fully graphical environment as facilitated by the MES software. The business logic BL, when finally generated by the production modeler PM, comprises a plant model of the production process and the related operating procedures for the production components 12 to 24 in a fully graphical environment. The production logic PL comprises the plant operational information in order to execute the final production process.

Even for the creation of the business logic BL and the production logic a high-level graphical language is used within the MES software, preferably consistently with the ISA-95 standard.

The master console 4 further comprises a client application builder CAB within the MES software being enabled to provide a native, WEB based graphical user interface for generating cross-functionality graphic screens S, hereinafter referred to as MES screens , said MES screens forming part of the network 2 as presentation clients PC, PC1 to PC4 and displaying data D which is stemming from the production components 12 to 24 and which is manipulated from the business logic BL by the production modeler PM, where it is required, i.e. when the data stemming from one of the production components 12 to 24 has to further processed or averaged with data stemming from other production components in a production logic PL.

The MES screens are also provided in a way that a user is enabled to take actions in terms of selecting MES functionalities (as mentioned exemplarily above) which are displayed on the MES screens. In this environment, it is an important issue that the MES screens to the diverse users are insofar customized that the bandwidth and the range of MES functionalities offered to the user comply with the skills and responsabilities of the respective user. Therefore, for granting an access to the MES functionalities for the user based on MES entity attributes within a MES controlled production process, a number of not strictly consecutive steps are hereinafter described in more detail.

Usually, a user subscribes to the MES controlled production process thereby using a user-specific log file or similar data that uniquely identifies the user. For this activity, the user may use the GUI of one of the MES screens S or the master console 4. Within the MES software, the MES functionalities are defined. The defined MES functionalities are represented in terms of a generic toolbar comprising clickable buttons on the MES screens. Exemplarily, MES functionalities are DISPATCH, POSTPONE, CANCEL, RESTART, SCHEDULE, AMEND, REPEAT, SPLIT, MOVE, ASSEMBLE, JOIN, SEND FOR MAINTENANCE, PREPARE, DISMANTLE and SETUP. These MES functionalities are displayed in a generic toolbar as clickable buttons. Further, logical entities are linked to the MES functionalities. Exemplarily, logical entities are PRODUCTION ORDER, PRODUCTION REQUEST, PRODUCTION SCHEDULE, PRODUCTION MODEL, MATERIAL LOT and TOOL. At least for a number of these logical entities, MES entity attributes are determined which specify typical and sometimes limiting properties or conditions of the logical entities. Exemplarily, for the legal entity PRODUCTION ORDER, an MES entity attribute may be "Production Order that produces quantity of final goods minor to 100".

Furthermore, in the MES software, a number of user profiles are determined whereby each user profile assigns different access types to the clickable buttons. Preferably, the access types comprise at least a permanent type, a condition type and a hidden type, wherein a clickable button in permanent type is always accessible on the MES screen and a clickable button in condition type is only accessible on the MES screen when a condition linked to one or more MES entity attributes is fulfilled and a clickable button in hidden type is not accessible on the MES screen at all. Therefore, the different user profiles deliver a generic customization for the toolbar with the clickable buttons on the MES screens. Once a user has subscribed to the MES software, the user-specific log file is analyzed in order to determine the respective user profile of the subscribed user. For the final preparation of the MES screens, a contextualization service is provided that displays the generic toolbar to the MES screen, thereby displaying the clickable buttons according to their access types being determined in the dependency of the determined user profile. With other words, the selection of the actually clickable buttons on the MES screen depends on the identified user profile thereby customizing the clickable buttons according to the authorizations assigned to the specific user profile. And last but not least, the MES controlled production process is executed according to the MES functionality accessible to and selectable by the respective user.

**Table 1: Example for the different authorizations to access the DISPATCH button of the logical entity "PRODUCTION ORDER".**

| **User Group** | Group 1 | Group 2 | Group 3 |
|---|---|---|---|
| **Logical Entity** | Production Order | Production Order | Production Order |
| **Action** | Dispatch | Dispatch | Dispatch |
| **Restriction Rule** | No restriction | Production Orders that produce quantity of goods minor 100 pieces | No dispatch allowed to this group |

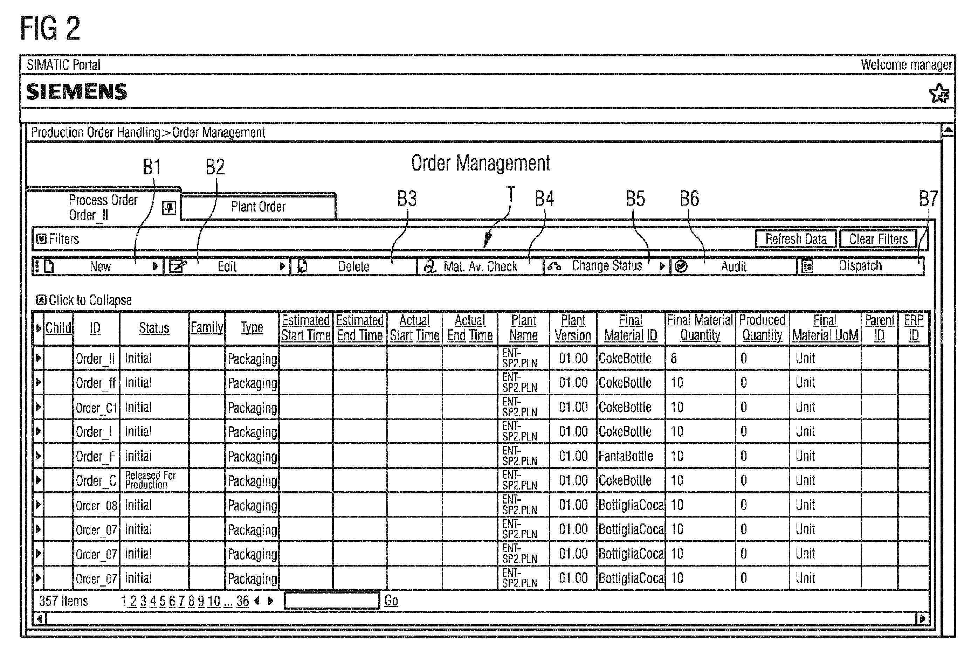

The table above now shows exemplarily the situation for the MES functionality/action "DISPATCH" for the logical entity "PRODUCTION". A user having a Group 1 user profile will see the DISPATCH button as actually clickable button. This group 1 user is allowed to dispatch production orders without any limitation. A user having a Group 2 user profile will see the DISPATCH button, too, but in order to allow him to access and click this clickable button, he forced to fulfill the condition laid down with the MES entity attributes as restriction rule. This group 2 user can access the DISPATCH button when the production order produces a quantity of goods minor 100. For that reason, the group 2 user has either to enter the number of goods to be produced and the visualization service will check this entry against the restriction rule. If the production order comprises the production of less than 100 goods, the clickable DISPATCH button will be actually enabled for the group 2 user. Eventually, the user of the group 3 are not authorized to dispatch any production order at all. For this group 3 user the clickable button associated to the DISPATCH action of the PRODUCTION ORDER logical entity will stay always disabled. Figure 2 now shows a screenshot taken from a typical MES screen which is in the present example customized for the production order management. Beside other entries, the screenshot comprises a column titled "ID" where all the production orders are listed. Other columns are dedicated to inform about the "Status", the "Type" and other important details of the various production orders. In the screenshot shown, two production orders, one in the first line and the other in the sixth line, are highlighted by the user and are now waiting for the next action. In the line above the table of production orders a typical MES toolbar T is represented. This toolbar T contains a number of clickable bottoms B1 to B7. The clickable button B7 is in the present example the DISPATCH buttom which has been already subject of the example described above. In the present example, the DISPATCH button B7 is enable for a group 1 user whenever this user selects one or more of the listed production orders. Sticking to the example explained above, the DISPATCH button B7 is enabled for group 2 user only when this user selects a production order that fulfills the condition stipulated in the MES entity attributes, such as a number of goods produced by the production order minor to a predefined number, such as 100 pieces. A group 3 user will not get the DISPATCH button B7 enabled after the selection of a production order.

The present example therefore explains the present invention by means of this non-limiting example. For other logical entities, other generic MES screens exist and are then customized according to the identified user profile of the subscribed user. Even in the example of Figure 2, a group 3 user may have some of the clickable buttons B1 to B7 enabled which a group 1 user might not have enabled. The customization really depends on the distribution of the work flow other the various user profiles and is therefore based on generic MES screens that are customized according to the present invention.

## Claims

1. A method for granting an access to MES functionalities to a user based on MES entity attributes within a MES controlled production process, comprising the steps of:
a) subscribing of the user to the MES controlled production process using a user-specific log file;
b) defining the MES functionalities and representing the MES functionalities in terms of a generic toolbar (T) comprising clickable buttons (B1 to B7) on a MES screen (S);
c) linking logical entities to the MES functionalities and determining the MES entity attributes for at least a number of logical entities;
d) determining a number of user profiles, each user profile assigning different access types to the clickable buttons (B1 to B7) wherein the access types comprise at least a permanent type, a condition type and a hidden type, wherein a clickable button in permanent type is always accessible on the MES screen and a clickable button in condition type is only accessible on the MES screen when a condition linked to the MES entity attributes is fulfilled and a clickable button in hidden type is not accessible on the MES screen at all;
e) analyzing the user-specific log file in order to determine the respective user profile of the subscribed user; and
f) providing a contextualization service that displays the generic toolbar (T) to the MES screen, thereby displaying the clickable buttons (B1 to B7) according to the access types being determined in the dependency of the determined user profile; and
g) executing the MES controlled production process according to the MES functionality accessible to and selectable by the respective user.

2. The method according to claim 1 wherein the logical entity is selected from a group comprising PRODUCTION ORDER, PRODUCTION REQUEST, PRODUCTION SCHEDULE, PRODUCTION MODEL, MATERIAL LOT and TOOL.

3. The method according to claim 1 or 2 wherein the MES functionality is selected from a group comprising DISPATCH, POSTPONE, CANCEL, RESTART, SCHEDULE, AMEND, REPEAT, SPLIT, MOVE, ASSEMBLE, JOIN, SEND FOR MAINTENANCE, PREPARE, DISMANTLE and SETUP.

4. A system for granting an access to MES functionalities to a user based on MES entity attributes within a production process controlled by a MES software, comprising the steps of:
a) a GUI allowing a user to subscribe to the MES controlled production process using a user-specific log file;
b) a client application builder allowing to define the MES functionalities and representing the MES functionalities in terms of a generic toolbar comprising clickable buttons on a MES screen and to link logical entities to the MES functionalities and to determine the MES entity attributes for at least a number of logical entities;
d) a MES software administrator enabled to determine a number of user profiles, each user profile assigning different access types to the clickable buttons wherein the access types comprise at least a permanent type, a condition type and a hidden type, wherein a clickable button in permanent type is always accessible on the MES screen and a clickable button in condition type is only accessible on the MES screen when a condition linked to the MES entity attributes is fulfilled and a clickable button in hidden type is not accessible on the MES screen at all;
e) logic means in order to analyze the user-specific log file in order to determine the respective user profile of the subscribed user;
f) a contextualization service that enables to display the generic toolbar to the MES screen, thereby displaying the clickable buttons according to the access types being determined in the dependency of the determined user profile; and
g) an MES execution engine for the execution of the MES controlled production process according to the MES functionality accessible to and selectable by the respective user.

5. The system according to claim 4 wherein the logical entity is selected from a group comprising PRODUCTION ORDER, PRODUCTION REQUEST, PRODUCTION SCHEDULE, PRODUCTION MODEL, MATERIAL LOT and TOOL.

6. The method according to claim 4 or 5 wherein the MES functionality is selected from a group comprising DISPATCH, POSTPONE, CANCEL, RESTART, SCHEDULE, AMEND, REPEAT, SPLIT, MOVE, ASSEMBLE, JOIN, SEND FOR MAINTENANCE, PREPARE, DISMANTLE and SETUP.
